Europäisches Patentamt

European Patent Office

Office européen des brevets

(19)

(11) **EP 0 889 431 B1**

(12) **EUROPÄISCHE PATENTSCHRIFT**

(45) Veröffentlichungstag und Bekanntmachung des Hinweises auf die Patenterteilung:
**01.10.2003 Patentblatt 2003/40**

(51) Int Cl.⁷: **G06K 9/00**, G06F 17/30

(21) Anmeldenummer: **98112279.9**

(22) Anmeldetag: **02.07.1998**

(54) **Verfahren zur Erkennung unikater Bildfolgen**

Method for the recognition of unique image sequences

Méthode pour la reconnaissance de séquences uniques d'images

(84) Benannte Vertragsstaaten:
**AT BE CH DE DK ES FI FR GB GR IE IT LI LU NL PT SE**

(30) Priorität: **02.07.1997 DE 19728099**

(43) Veröffentlichungstag der Anmeldung:
**07.01.1999 Patentblatt 1999/01**

(73) Patentinhaber: **Schulze, Klaus, Dr.-Ing.**
**23896 Nusse (DE)**

(72) Erfinder: **Schulze, Klaus, Dr.-Ing.**
**23896 Nusse (DE)**

(74) Vertreter: **von Bülow, Tam, Dr.**
**Patentanwalt,**
**Mailänder Strasse 13**
**81545 München (DE)**

(56) Entgegenhaltungen:
**EP-A- 0 358 910**   **DE-C- 4 309 957**
**US-A- 4 739 398**

• **YEO B -L ET AL: "A UNIFIED APPROACH TO TEMPORAL SEGMENTATION OF MOTION JPEG AND MPEG COMPRESSED VIDEO" PROCEEDINGS OF THE INTERNATIONAL CONFERENCE ON MULTIMEDIA COMPUTING AND SYSTEMS,US,LOS ALAMITOS, IEEE COMP. SOC. PRESS, 15. Mai 1995 (1995-05-15), Seiten 81-88, XP000632094 ISBN: 0-8186-7105-X**
• **SCHULZ, ANNE: "Media-Observer: Ein 'Renner' (nicht nur) für die Werbewirtschaft" PRESSEMITTEILUNG 4/97 DER UNIVERSITÄT DER BUNDESWEHR HAMBURG, [Online] 31. Januar 1997 (1997-01-31), XP002153569 Gefunden im Internet: <URL:http://www.unibw-hamburg.de/PRWEB /pre sse/pr-04-97.html> [gefunden am 2000-11-22]**

**Beschreibung**

Die Erfindung betrifft ein Verfahren zur Erkennung unikater Bildfolgen gemäß dem Oberbegriff des Patentanspruches 1 sowie eine Vorrichtung zur Durchführung des Verfahrens gemäß Anspruch 21.

Die EP 0 358 910 beschreibt ein Bilderkennungssystem, bei welchem durch quasi stochastische Extraktion von Helligkeitsmerkmalen aus jedem Bild eine Eingangssequenz und deren Vergleich mit Referenzmustern eine Wiedererkennung von Bildfolgen durchgeführt wird. Die Helligkeitsmerkmale innerhalb eines Bildes werden dekorreliert, indem über mehrere Bilder unterschiedliche Merkmale ausgewählt werden.

Die US 4,739,398 A beschreibt ein ähnliches Verfahren, bei dem aus jedem Bild 16 Bit lange Worte von pseudo-zufällig verteilten Stellen extrahiert und über acht, aus der Bildfolge nach stochastischen Betrachtungen extrahierte Merkmale zu einer Signatur zusammengesetzt werden. Im Betrieb werden die Bildsignaturen in einem kreisförmigen Pufferspeicher eingelesen und durchgeschoben. Ausgelesen werden sie mit Hilfe der gespeicherten Offsets gemäß des Bildungsgesetzes der Segmentsignaturen. Ein Vergleich erfolgt mit einer EX-NOR-Schaltung.

Im YEO B-L et al: "A Unified Approach to Temporal Segmentation of Motion JPEG and MPEG compressed Video", Proceedings of the international Conference on multimedia computing and Systems, US, Los Alamitos, IEEE Comp. Soc. Press, 15. Mai 1995 (1995-05-15), Seiten 81-88, XP000632094; ISBN: 0-8186-7105-X, ist die Theorie beschrieben, wie in nach JPEG oder MPEG komprimierten Videos Änderungen der Szenen detektiert werden können. Dabei wird ein Algorithmus vorgeschlagen, der die Gleichkomponente der Sequenz untersucht.

Bildfolgen, die aus einer Mehrzahl aneinander gereihter inhaltlich miteinander verbundener Einzelbilder bestehen, sollen z. B. im Fernsehen bei jeder erneuten Ausstrahlung erkannt werden. Diese Bildfolgen können Werbespots, kostenpflichtige Beiträge, alte Filme oder Videoclips oder politische Beiträge, wie z. B. Wahlkampfausschnitte, sein. Allen genannten Anwendungen ist gemeinsam, daß die Verbreitung der Bildfolgen wegen zu zahlender Gebühren aus rechtlichen Gründen oder aus statistischen Gründen erfaßt werden sollen. Unikate Bildfolgen bedeutet dabei, daß die Bilder inhaltlich in ihrer ursprünglichen Form erhalten bleiben, d. h. alle Bildpunkte sind nach Helligkeit und Farbart einzigartig und damit unveränderlich. Beim Kopieren auf technisch hochwertigen Anlagen wird diese einzigartige Anordnung in keinem Wert verändert oder ergänzt. Der Begriff "unikat" bezieht sich also auch auf kopierte Bildfolgen.

Werbespots werden beispielsweise zu Zeiten von Fernsehanstalten ausgestrahlt, die für den Werbenden besonders interessant sind, weil die Reichweite besonders groß ist. Für den Werbenden besteht ein Interesse, überprüft zu bekommen, ob sein Spot auch wirklich zur geschalteten Zeit gesendet worden ist. Ein Werbespot ändert im Laufe seiner Existenz sein Aussehen, d. h. er wird kürzer, einige Bilder werden geändert bzw. ganz ausgetauscht. Diese neue Bildfolge soll von der ursprünglichen Version unterschieden werden.

Aus der DE 43 09 957 C1 ist ein Verfahren zur Erkennung unikater Bildfolgen bekannt. Dabei werden einzelne Bildelemente, sogenannte Pixel zu Gruppen bzw. Blöcken zusammengefaßt, die Cluster genannt werden und deren Luminanz- bzw. Helligkeitswerte digitalisiert und als Merkmale mit dem Merkmalen bekannter Bilder bzw. Referenzmuster verglichen werden.

Wegen der notwendigen Datenkomprimierung bzw. Datenreduktion ist die Wahrscheinlichkeit einer Falscherkennung eines Bildes relativ hoch. Um die Anzahl der Falscherkennungen zu verringern, werden bei dem bekannten Verfahren daher mehrere aufeinander folgende Bilder abgetastet. Nachteilig ist dabei, daß sich aufeinanderfolgende Bilder normalerweise stark ähneln, so daß die gefundenen Merkmale häufig zu zufälligen Ähnlichkeiten führen, ohne daß tatsächlich ähnliche Bilder vorliegen. Diese sogenannten zufälligen Falscherkennungen beeinträchtigen zwar nicht unbedingt die Erkennung eines Werbespots an sich, führen jedoch zu einem großen Datenaufkommen, das den Rechner belastet.

Aufgabe der vorliegenden Erfindung ist es daher, das Datenaufkommen zu vermindern und die Zahl der Falscherkennungen zu verringern.

Die Aufgabe wird durch die in Anspruch 1 und 21 definierten Merkmale gelöst.

Dadurch, daß anstelle einer Merkmalsentnahme von benachbarten Bildern nach einem quasi stochastischen Verfahren Merkmale über mehrere Bilder hinweg entnommen werden, sind die zufälligen Ähnlichkeiten aufeinanderfolgender Bilder vernachlässigbar, da die Bindungen aufeinander folgender Bilder aufgebrochen werden. Die Zahl der zufälligen Falscherkennungen und das damit verbundene, den Rechner belastende Datenaufkommen werden somit verringert.

Ausgewählte Merkmale einzelner Bilder werden in geordneter Reihenfolge in einen als Schieberegister organisierten Speicher eines Bilderkarussels eingeschrieben und nach einem quasi stochastischen Verfahren im wahlfreien Zugriff ausgelesen. Der Zugriff auf die Merkmale erfolgt dabei mit einer größtmöglichen Sprungweite über die Bilder hinweg. Zugleich erfolgt der Zugriff auf die Merkmale mit größtmöglicher Distanz innerhalb der Bilder. Durch diese Maßnahme wird eine Dekorrelierung der Merkmale erreicht, weil die zeitlichen und räumlichen Bindungen aufgebrochen werden.

Gemäß einer bevorzugten Ausführungsform der Erfindung wird eine zweistufige Verarbeitung des Verfahrens mit einer ersten Stufe zur Groberkennung und einer zweiten Stufe zur Feinerkennnung durchgeführt. Die Groberkennung ist in ihrem Datenaufkommen so reduziert, daß sie echtzeitfähig ist. Sie erlaubt die Erkennung eines Spots, ohne evtl. vorhandene Mutationen feststellen zu können. Die Feinerkennung erfolgt erst dann, wenn die Groberkennung eine Bildfolge bzw. Werbespot dem vorhandenen Referenzmuster zugeordnet hat. Die Feinerkennung liefert dann die letzte Sicherheit und deckt örtliche und zeitliche Mutationen auf.

Zur Bildung der Merkmale wird die Änderung der Helligkeit innerhalb eines aus räumlich zusammenhängenden Pixeln gebildeten Clusters herangezogen.

Dabei werden die Cluster einer diskreten Cosinus-Transformation unterworfen. Einer der niederfrequenten Wechselkoeffizienten wird auf sein Vorzeichen reduziert und als Merkmal verwendet. Eine Bildfolge wird in Zeitscheiben konstanter Länge aufgeteilt, wobei jede Zeitscheibe eine eigenständige Einheit darstellt, die korreliert wird. Die Bilder einer Zeitscheibe werden somit in einer extrem datenreduzierenden Weise codiert. Die Erkennung bzw. Groberkennung eines Spots ergibt sich dann, wenn die einzelnen Zeitscheiben in der richtigen Reihenfolge und im richtigen zeitlichen Abstand erkannt werden.

Die Erfindung betrifft weiterhin eine Vorrichtung zur Durchführung des Verfahrens nach einem der Ansprüche 1 bis 20.

Aus der DE 4309 957 C1 ist eine Vorrichtung zur Durchführung eines Verfahrens zur Erkennung unikater Bildfolgen bekannt. Die bekannte Vorrichtung hat den Nachteil, daß nur eine Merkmalsentnahme aufeinander folgender Bilder möglich ist, so daß die den Bildern entnommenen Merkmale miteinander korrelieren und zu einer hohen Anzahl von Falscherkennungen führen.

Bei der vorliegenden Erfindung ist ein Bilderkarussel, das einen als Schieberegister organisierten Speicher aufweist, einerseits über einen DCT-Transformer mit einem Videodecoder mit Raster/Cluster-Konverter verbunden und andererseits über einen Korrelator mit einem Referenzspeicher verbunden, und eine von einem Empfänger in den Videodecoder eingespeiste Bildfolge ist als ein Merkmalsvektor dem Korrelator zuführbar und mit einem im Referenzspeicher speicherbaren Referenzmuster vergleichbar.

Durch die Verwendung des Bilderkarussels wird auf einfache Weise eine quasi stochastische Merkmalsentnahme ermöglicht, wobei die Merkmale unterschiedlicher Bilder dekorreliert werden.

Nach einer bevorzugten Ausführungsform der Erfindung ist zwischen DCT-Transformer und Bilderkarussel eine Abzweigung zu einem Feinerkennungsspeicher vorgesehen, der als FIFO(first in, first out)-Schieberegister ausgebildet ist, in dem die gesamten Merkmale einer Bildfolge speicherbar sind.

Durch die Verwendung des FIFO-Schieberegisters ist es möglich, eine Feinerkennung erst nach in Echtzeit erfolgter Groberkennung durchzuführen.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

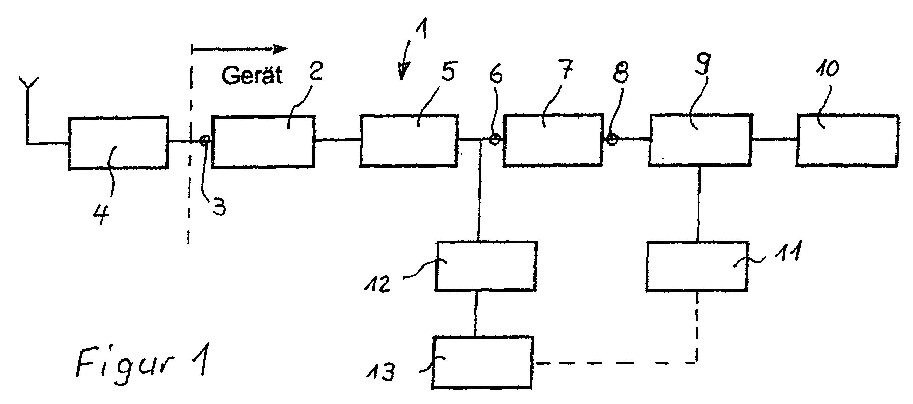

Figur 1: Ein Blockschaltbild einer Vorrichtung zur Erkennung unikater Bildfolgen,

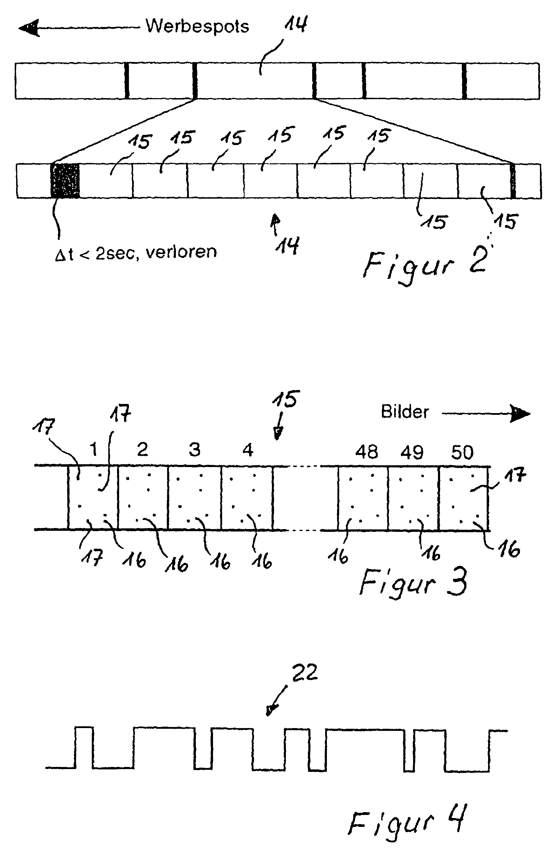

Figur 2: eine schematische Darstellung von Werbespots als Bildfolgen mit einer herausgegriffenen in Zeitscheiben zerlegten Bildfolge,

Figur 3: schematische Darstellung der Bilder einer einzelnen Zeitscheibe mit Merkmalen,

Figur 4: Darstellung eines Merkmalsvektors der Zeitscheibe von Figur 3 als Binärstrom,

Figur 5: ein Beispiel für eine Mutation, bei der ein Produkt das Attribut "neu" verloren hat,

Figur 6: ein Beispiel für eine lokale Mutation innerhalb eines Bildes, bei dem ein Buchstabe in einer Beschriftung (Ausschnitt) geändert wurde,

Figur 7: Darstellung spektraler Referenzmuster in Form von Basisbildern der niederwertigsten Koeffizienten,

Figur 8: eine Darstellung der Varianten einzelner Koeffizienten einer diskreten Cosinus-Transformation,

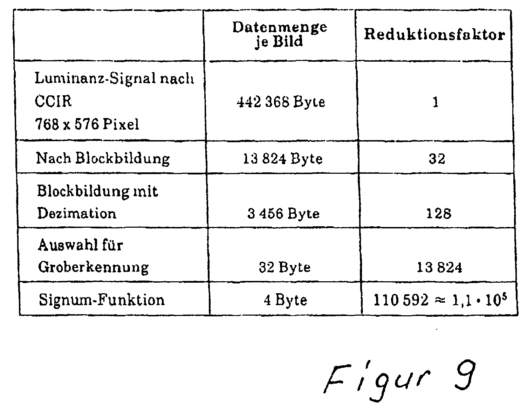

Figur 9: eine Darstellung der Datenreduktion vom Luminanzsignal im CCIR-Format,

Figur 10: eine Darstellung der Amplitudenverteilungsdichte des Koeffizienten eines beliebigen Bildes ohne Down sampling,

Figur 11: eine Darstellung der Amplitudenverteilungsdichte des $C_{01}$-Koeffizienten eines beliebiges Bildes mit Down sampling,

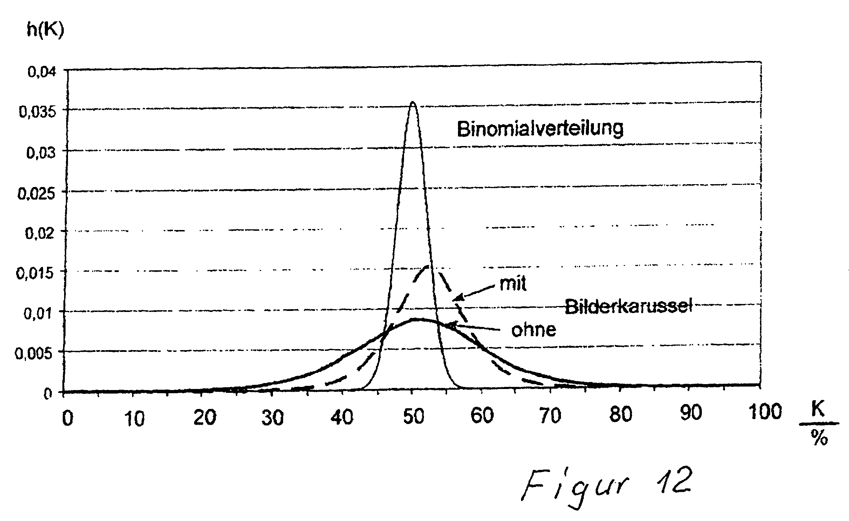

Figur 12: eine Darstellung des Maßes zufälliger Übereinstimmungen von Bildfolgen mit Referenzmustern im Vergleich mit der theoretisch erwarteten Binomialverteilung,

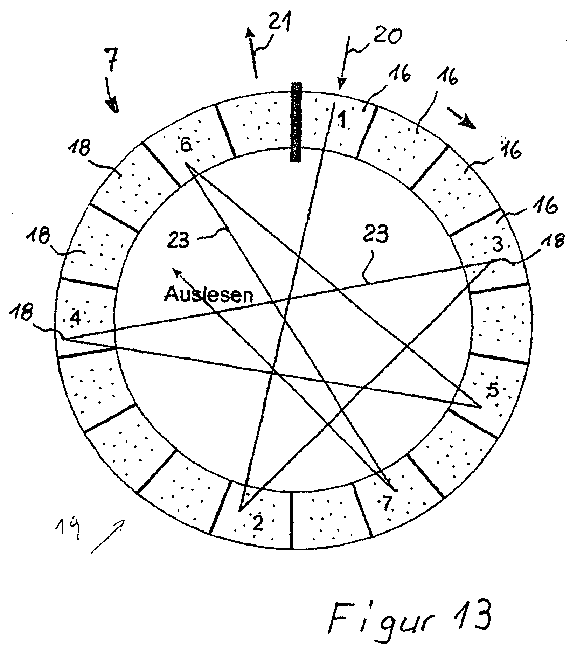

Figur 13: eine schematische Darstellung eines Bilderkarussels,

Figur 14: eine Darstellung der Verteilung von zufälligen Übereinstimmungen der Binärmuster bei verschiedenen dekorrelierenden Maßnahmen und

Figur 15: eine Darstellung der Auswirkung der dekorrelierenden Maßnahmen oberhalb der Erkennungsschwelle als Ausschnitt von Bild 14.

Eine Vorrichtung zur Erkennung unikater Bildfolgen (1) besteht im wesentlichen aus einem Videodecoder (2) mit Raster/Cluster-Konverter, der mit seinem Eingang (3) mit dem Videoausgang eines Empfängers (4) verbunden ist. Der Ausgang des Videodecoders (2) ist mit einem Eingang eines DCT-Transformators (5) verbunden. Der Ausgang des DCT-Transformators (5) ist mit einem Eingang (6) eines Bilderkarussels (7) verbunden. Das Bilderkarussel (7) ist mit seinem Ausgang (8) mit dem Eingang eines Korrelators (9) verbunden. Der Korrelator (9) ist seinerseits mit einem Referenzspeicher (10) verbunden. Der Korrelator (9) ist weiterhin mit einer Auswerteeinheit (11) zur Groberkennung verbunden. Zwischen DCT-Transformer (5) und Bilderkarussel (7) ist ein FIFO-Schieberegister (12) angeordnet, das mit einer Auswerteeinheit (13) zur Feinerkennung verbunden ist. Von der Auswerteeinheit (11) zur Groberkennung wird in einer ersten Stufe der Signalverarbeitung eine Groberkennung durchgeführt. Wenn die Auswerteeinheit (11) zur Groberkennung eine Bildfolge (14) mit so großer Ähnlichkeit zu einem im Referenzspeicher (10) gespeicherten Referenzmuster gefunden hat, daß es sich mit großer Wahrscheinlichkeit (z.B. >90 %) um den gesuchten Werbespot bzw. die gesuchte Bildfolge (14) handelt, erhält die Auswerteeinheit (13) zur Feinerkennung von der Auswerteeinheit (11) zur Groberkennung ein Erkennungssignal und startet in einer zweiten Verarbeitungsstufe mit dem im FIFO-Schieberegister (12) gespeicherten Daten. Die Feinerkennung liefert dann die letzte Sicherheit und deckt örtliche und zeitliche Mutationen auf.

Wegen der zeitlichen Mutation (Kürzung oder Änderung einer Szene) muß die gesamte Bildfolge (14) codiert werden. Zweckmäßigerweise wird hierzu die Bildfolge (14) in sogenannte Zeitscheiben (15) von z.B. 2 Sekunden Länge aufgeteilt. Die Zeitscheiben (15) stellen selbständige Einheiten dar, die jede für sich korreliert wird. Die Erkennung (Groberkennung) einer Bildfolge (14) ergibt sich dann, wenn die einzelnen Zeitscheiben (15) in der richtigen Reihenfolge und im richtigen zeitlichen Abstand von der Auswerteeinheit (11, 13) erkannt werden.

Liegt eine zeitliche Mutation vor, dann fehlen einzelne Zeitscheiben (15), während die übrigen in der erwarteten Ordnung erkannt werden. Die genannte Länge von ca. 2 Sekunden ist in zahlreichen Versuchen als günstig ermittelt worden, kann aber insofern Korrekturen erfahren, als es bei Werbespots bzw. Bildfolgen (14) bevorzugte Längen gibt und man die Zeitscheiben (15) dann so wählt, daß diese Längen ohne Rest auf die Zeitscheiben aufgeteilt werden können. Beispiel: Kürzeste Spotlänge 7 Sekunden, daraus folgt, Länge der einzelnen Zeitscheiben (15) = 1,75 Sekunden. Anderenfalls bleibt ein nicht mehr teilbarer Rest bei der Korrelation unberücksichtigt.

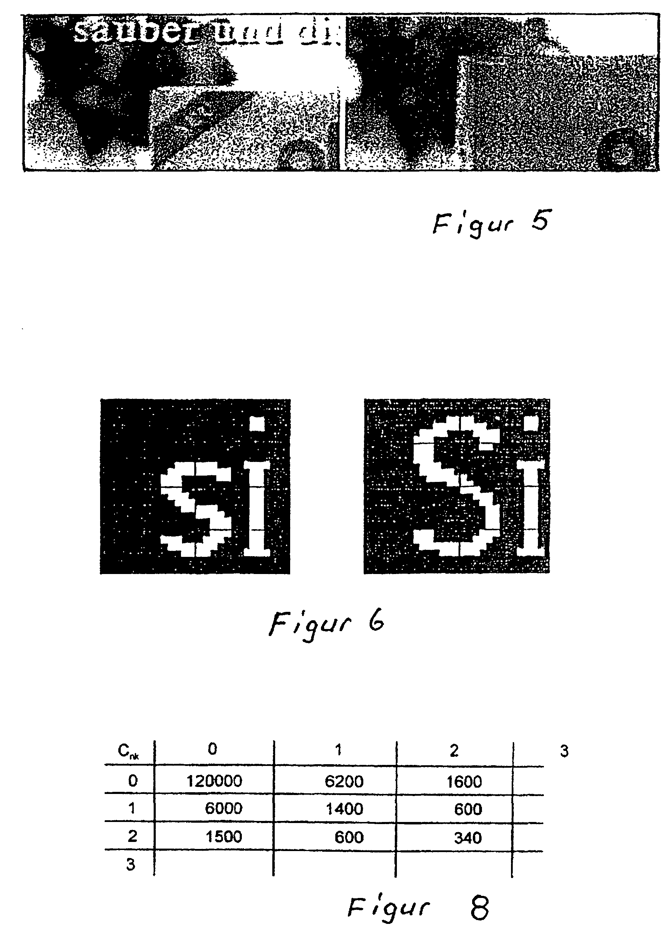

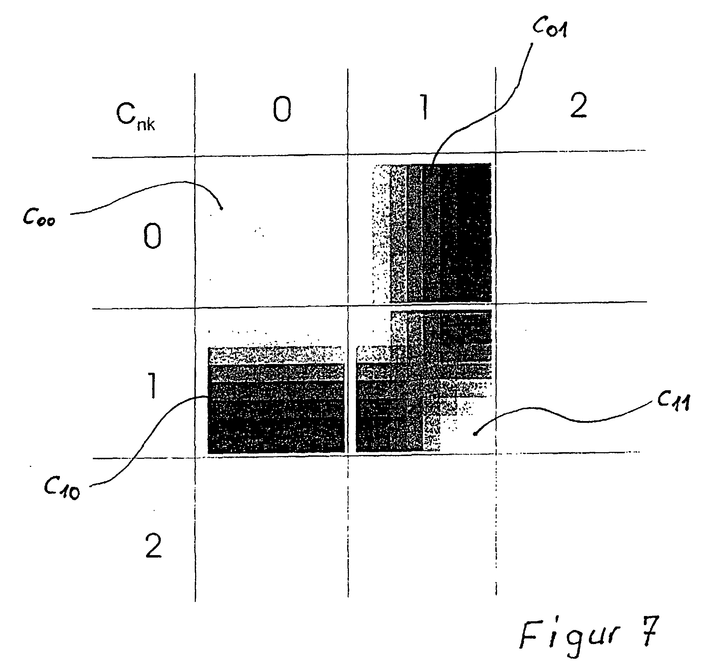

Lokale Mutationen, also Veränderungen innerhalb eines Bildes (16) einer Bildfolge (14), erstrecken sich über ein in Pixeln (Bildpunkten) ausdrückbaren Bereich. Figur 6 zeigt ein Beispiel, in dem ein Buchstabe in einer Beschriftung (Ausschnitt) geändert wurde. Die signifikanten Veränderungen überdecken einen Bereich von 32 x 32 Pixeln. Für die Feinerkennung, also für die Erkennung eventuell vorhandener örtlicher Mutationen wird jedes Bild in Bereiche etwa der genannten Größe unterteilt, die als selbständige Einheit mit entsprechenden Bereichen anderer Bilder in der Verarbeitungseinheit (13) korreliert (verglichen) werden müssen. Zur Kodierung einer Pixel-Gruppe, also eines Clusters, wird der Wechselanteil der Luminanz bzw. Helligkeit innerhalb des Clusters herangezogen. Dieser Wechselanteil gibt, ganz allgemein gesprochen, die Änderung der Helligkeit innerhalb des Clusters an, im Gegensatz zu einem Gleichanteil, der mit mittlerer Helligkeit beziffert wird. Die Helligkeitsänderung kann sich in vielfältiger Weise vollziehen: Sie kann ein einfacher Gradient in einer bestimmten Richtung oder auch ein mehrfacher Hell-Dunkel-Wechsel sein. Zweckmäßigerweise wird die von dem DCT-Transformator (5) durchgeführte diskrete Cosinus-Transformationfür die Detektion der Hell-Dunkel-Wechsel benutzt. Diese diskrete Cosinus-Transformation wird auch innerhalb bekannter Kompressionsalgorithmen, z.B. JPEG, MPEG, eingesetzt und daher in hochintegrierten Chips, z. B. Zoran 36050, implementiert. Bei diesen Bildkompressionen wird das Bild in Cluster (Blöcke) der Größe 8 x 8 Pixel aufgeteilt. (Raster to Cluster-Conversion), die anschließend einer zweidimensionalen diskreten Cosinus-Transformation unterworfen werden. Auf diese Weise erhält man eine frequenzmäßige Darstellung der Bilder. Die Kompression besteht dann im Prinzip darin, daß die hochfrequenten Anteile stark reduziert oder sogar weggelassen werden. Die spektralen Referenzmuster für die einzelnen Koeffizienten $C_{nk}$ werden Basisbilder genannt, von denen die niederwertigsten in Figur 7 dargestellt sind. Das linke obere Basisbild ($C_{00}$-Koeffizient) liefert - auf einen 8 x 8 Pixel-Cluster angewandt - den Gleichanteil, also die mittlere Helligkeit des Cluster. Das rechte obere Basisbild ($C_{01}$-Koeffizient) prüft, in welchem Maß der gezeigte Helligkeitsverlauf im untersuchten Cluster vorhanden ist. Es liefert also die unterste Spektrallinie der Bildinformation nach dem Gleichanteil. Die übrigen Basisbilder aus Figur 7 liefern entsprechende Informationen in anderer Bildrichtung. Die Basisbilder für die DCT-Koeffizienten höherer Ordnung sind nicht dargestellt worden, da sie für diese Erfindung keine Bedeutung haben. Die diskrete Cosinus-Transformation besitzt die Eigenschaft, daß wesentliche Informationen, die im Originalbereich auf alle Stützwerte verteilt waren, nach der Transformation in wenigen Komponenten konzentriert sind. D.h., die wesentlichen Energieanteile befinden sich im sogenannten DC-Koeffizienten (Gleichanteil) und in den unteren AC-Koeffizienten (niederfrequente Wechselanteile).

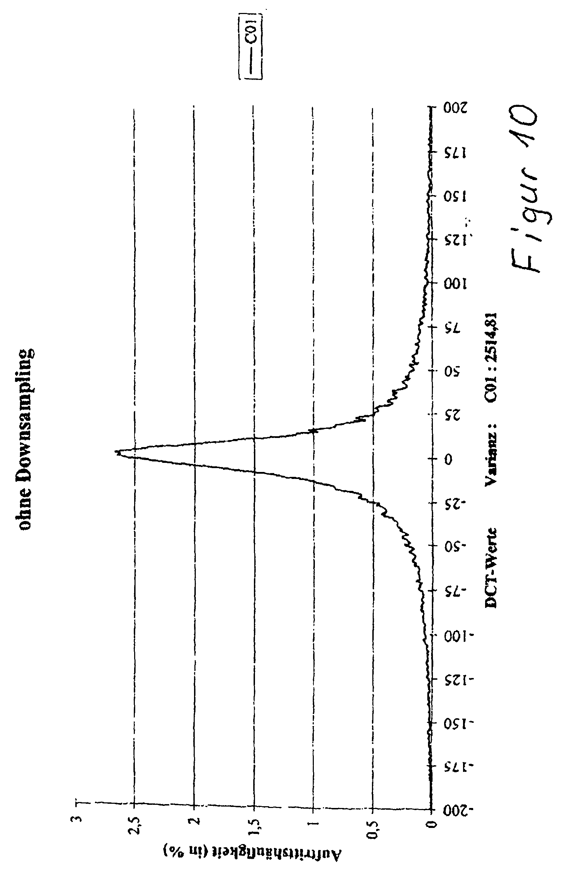

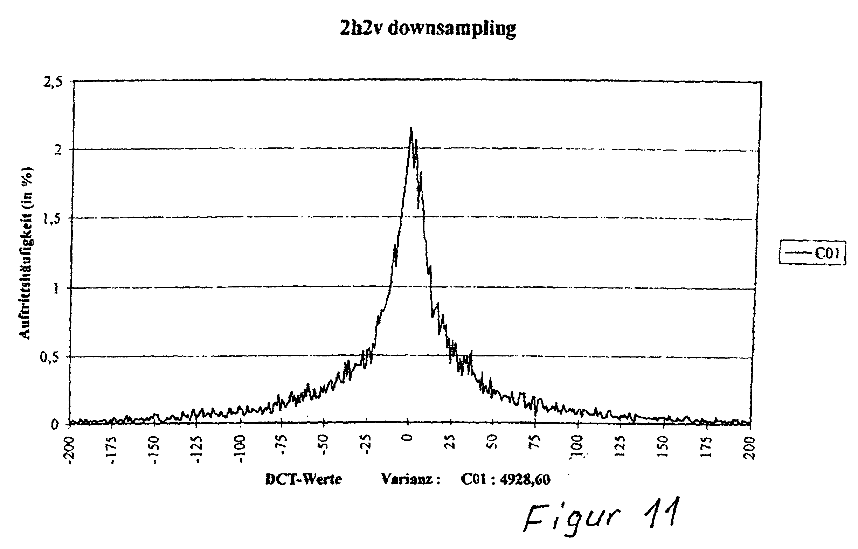

Figur 8 zeigt die Abnahme der Energie bei AC-Koeffizienten höherer Ordnung. Der Energieanteil in beispielsweise dem $C_{01}$-Koeffizienten kann vorteilhafterweise in etwa verdoppelt werden, wenn eine horizontale und vertikale Dezimation eingesetzt wird. Darunter versteht man das mittelnde Zusammenfassen von vier quadratisch angeordnet Pixeln zu einem neuen Pixel. Dieses Verfahren wird auch Downsampling genannt. Auf diese Weise wird ein 16 x 16 Pixel umfassender Cluster auf einen 8 x 8 Pixel großen Cluster zurückgeführt, auf den dann wiederum die diskrete Cosinus-Transformation angewandt wird. Die nun erzeugten $C_{01}$-Koeffizienten enthalten im Allgemeinen die doppelte Leistung wie die nur aus einem originären 8 x 8 Cluster gewonnenen Koeffizienten. In der Hardwarerealilsation ergibt sich dieses Verfahren zum Teil aus dem beim Fernsehen üblichen Zeilensprungverfahren, bei dem die Bilder halbbildweise zeilenmäßig verkämmt übertragen werden. Wird nun nur ein Halbbild betrachtet, so liegt bereits ein vertikales Downsampling vor. Das horizontale Downsampling ist bei den marktgängigen Chipimplementationen zusätzlich einstellbar. In Figur 10 ist die Amplitudenverteilungsdichte des $C_{01}$-Koeffizienten eines beliebigen Bildes (16) ohne Downsampling dargestellt. In Figur 11 ist die Amplitudenverteilungsdichte des $C_{01}$-Koeffizienten von Figur 10 mit Downsampling dargestellt. Die etwas breitere Kurve von Figur 11 liefert numerisch etwa die doppelte Varianz wie die Kurve von Figur 10.

Nachdem nun alle Bilder (16) einer Zeitscheibe (15) in Cluster der Größe von 8 x 8 Pixeln - durch Dezimation sind das Bildblöcke bzw. Cluster von 16 x 16 Pixeln - zerlegt und in den Spektralbereich transformiert worden sind, wird der unterste leistungsstarke Wechselkoeffizient - das ist $C_{01}$ oder $C_{10}$ eines jeden Clusters - einer weiteren Datenreduktion dadurch unterzogen, daß nur sein Vorzeichen weiter verwertet wird. Ein Cluster von 8 x 8 Pixeln wird somit durch ein Bit dargestellt, das das Vorzeichen des Wechselkoeffizienten angibt. Durch diese Maßnahme hat der so erhaltene Datensatz einer Zeitscheibe (15) folgende entscheidenden Vorzüge: Die gesamte Bildfolge ist in einer extrem datenreduzierenden Weise codiert worden. Jedes Bit ist ein lokales Merkmal, das unabhängig von der Aussteuerung der Bildsignale und deren Störabstand ist.

Die Datenreduktion vom Luminanzsignal CCIR-Format von 768 x 576 Pixeln beträgt zunächst rd. $2 \times 10^3$. Bei einer Zeitscheibenlänge von beispielsweise 2 Sekunden ergibt sich immer noch eine Datenmenge von rd. 11 kByte. Bei einer Echtzeitverarbeitung von tausenden von Werbespots wäre diese Datenmenge zu groß. Die Groberkennung wird daher als echtzeitfähiges Verfahren genutzt, um Bildfolgen ohne Bewertung der evtl. vorgenommenen Mutationen zu erkennen. Die Feinerkennung setzt dann als nicht echtzeitfähiges Verfahren auf die Groberkennung auf, bestätigt diese und erlaubt die Analyse der Mutationen.

Eine Groberkennung ist schon mit etwa 16 Merkmalen (17,18) je Bild (16) möglich. Unter Merkmal (17, 18) ist das Vorzeichenbit der DCT-Koeffizienten zu verstehen. Damit werden den 1.728 Vorzeichenbits eines (Halb-) Bildes jeweils 16 Bit, d.h., zwei Byte nach einem bestimmten Schema entnommen. Bei einer zwei Sekunden langen Zeitscheibe (15) sind das 100 Byte je Zeitscheibe (15). Das Entnahmeschema wirkt der räumlichen Bindung der Koeffizienten entgegen. Bildobjekte haben im Allgemeinen eine Ausdehnung, die viele Cluster umfaßt. Für diese Cluster ergeben sich mit großer Wahrscheinlichkeit gleiche DCT-Koeffizienten. Merkmale (17,18), die diesen Clustern entnommen werden, sind somit nicht unabhängig voneinander und verbessern nicht die Erkennungsgüte. Die Bindungen werden aufgebrochen, wenn die 16 Merkmale (17,18) nach einem quasi stochastischen Verfahren möglichst weit auseinderliegenden Clustern entnommen werden. Hier verfährt man in gleicher Weise bei jedem Bild (16) einer Zeitscheibe (15), dann erhält man insgesamt einen Datenstring von beispielsweise 16 x 50 = 800 Bit Länge. Setzt man Unabhängigkeit der einzelnen Bit voraus, dann ergibt sich die Wahrscheinlichkeit einer zufälligen Übereinstimmung zweier solcher Binärmuster in k Bit von N möglichen nach der Binomialverteilung.

$$b\,(k,N,p) = \binom{N}{k}p^{k}(1-p)^{N-k}$$

mit p als Auftrittswahrscheinlichkeit eines Merkmals (17,18).

Bei den hier betrachteten Fällen ist p = 0,5, d. h, 0 und 1 als Vorzeichenbit eines Koeffizienten sind gleich wahrscheinlich. Die Binomialverteilung reduziert sich somit auf

$$b\,(k,N,p) = \binom{N}{k}\,p^{N}$$

Gibt man eine untere Schranke von 85 % für eine Erkennung vor, $\frac{k}{N} \cdot 100\% \geq 85\%$ dann werden alle Ähnlichkeiten zweier Zeitscheibenmuster über 85 % als Erkennungen gewertet. Ob diese Zeitscheibenerkennung wirklich zu einer echten Bildfolgenerkennung gehört, wird von einer softwaremäßigen Plausibilitätsprüfung festgestellt. Anderenfalls handelt es sich um eine zufällige Übereinstimmung, eine sogenannte Falscherkennung.

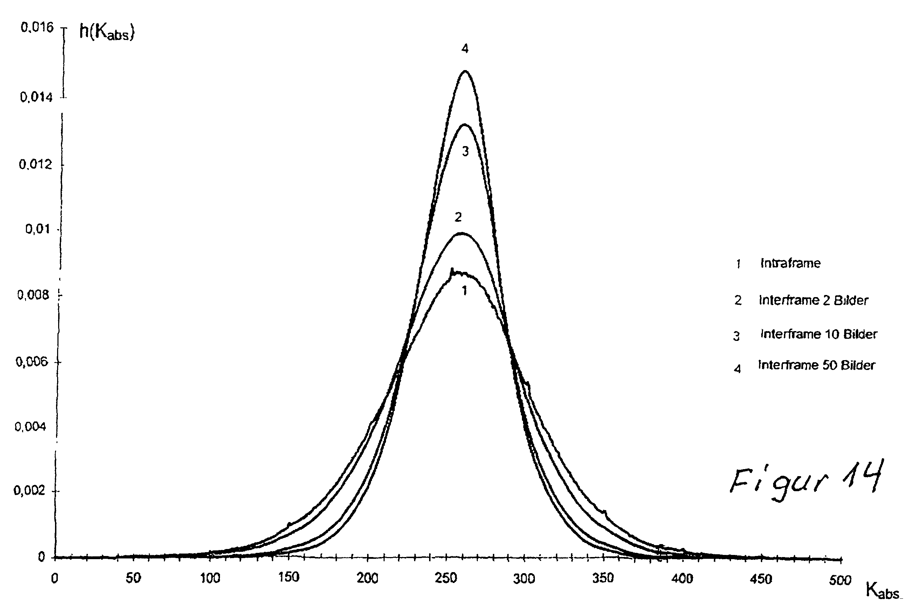

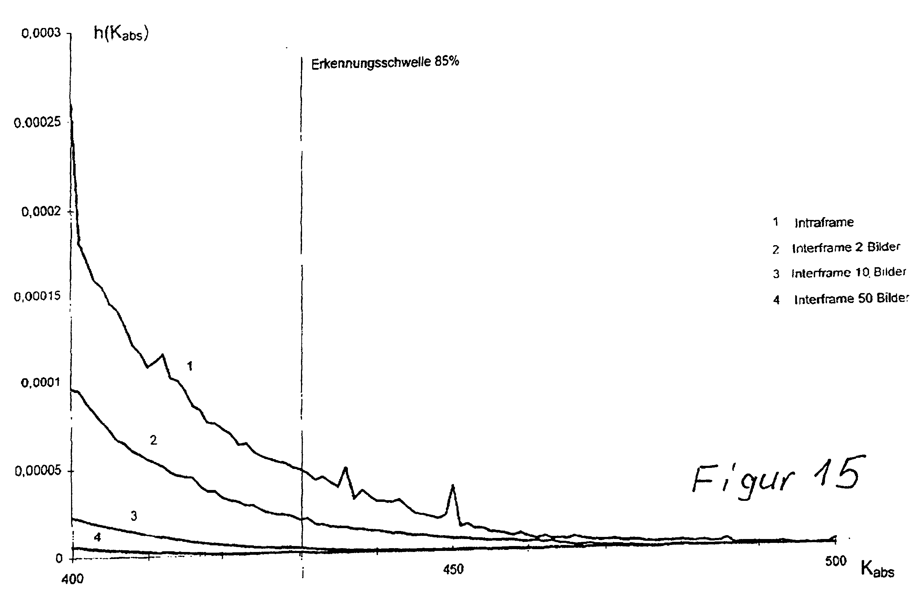

Um den Falscherkennungen zu begegnen, ist das Bilderkarussel (7) vorgesehen. Das Bilderkarussel ist ein als Schieberegister organisierter Speicher (19), in dem die ausgewählten Merkmale (17,18) der Bilder (16) einer Zeitscheibe (15) in geordneter Reihenfolge eingeschrieben werden. Das Bilderkarussel (7) hat nun die Aufgabe, mehrere Bilder (16) so zu verwürfeln, daß die Muster nicht bildsequenziell generiert werden, sondern nach einem quasi zufälligen Muster über mehrere Bilder (16). Es ergibt sich die sogenannte Interframe-Codierung. In Figur 14 ist die Verteilung zufälliger Übereinstimmung solcher Interframe-Codierungen dargestellt, wobei die Verwürfelung über 2, 10 und 50 Bilder vorgenommen wurde. Die Kurve 1 zeigt eine sogenannte Intraframe-Codierung, bei der die Merkmale in der Reihenfolge der Bilder bearbeitet werden. In Figur 15 ist der Bereich oberhalb der Erkennungsschwelle von 85 % vergrößert dargestellt. Nach jeweils 40 ms werden die Merkmale (17, 18) eines neuen Bildes (20) dem Speicher (19) hinzugefügt, während das "älteste" Bild (21) am Ende des Speichers (19) hinausgeschoben wird. Zwischen zwei Aktualisierungen des Speichers (19) werden nach einem quasi stochastischen Verfahren die N-Merkmale (17, 18) einer Zeitscheibe im wahlfreien Zugriff ausgelesen und dem Korrelator (9) zum Vergleich mit dem Referenzmustern zur Verfügung gestellt. Dabei wird so vorgegangen, daß kein Cluster eines Bilder (16) während seiner Verweilzeit im Bilderkarussel (7) ein zweites Mal ausgelesen wird. Der Zugriff auf die Merkmale (17, 18) erfolgt mit größtmöglicher Sprungweite über die Bilder (16) hinweg bei gleichzeitig größtmöglicher Distanz innerhalb der Bilder (16). Durch diese Maßnahme wird eine Dekorrelation der Merkmale (17, 18) erreicht, weil die zeitlichen und räumlichen Bindungen aufgebrochen werden.

Das Verfahren kann in den folgenden Schritten durchgeführt werden:

a) Die Bildfolgen (14) werden in Zeitscheiben (15) von 1,5 bis 2 Sekunden Dauer aufgeteilt (Anpassung an die Erkennungsaufgabe) .

b) Jedes Bild (16) wird in Anlehnung an das gängige JPEG-Verfahren in Cluster aufgeteilt, wobei vorteilhaft ein vertikales und horizontales Downsampling verwendet wird. Die Cluster der Bilder werden einer diskreten Cosinustransformation unterworfen und das Vorzeichen eines niederwertigen Wechselkoeffizienten wird als Merkmal (17, 18) verwendet (vorzugsweise $C_{01}$ oder $C_{10}$).

c) Aus den nach Punkt b) je Bild (16) entstandenen 1.728 Merkmalen (17) wird eine Untermenge von ca. 800 bis 1.000 Merkmalen (18) für die echtzeitfähige Korrelation bzw. Groberkennung in das Schieberegister des Bilderkarussels (7) geladen. Von hier werden nach einem dekorrelierend wirkenden Zugriffsverfahren ca. 800 bis 1.000 Merkmale (18) je Zeitscheibe (15) entnommen und als Merkmalsvektor (22) für die gesamte Zeitscheibe abgelegt. Das entspricht etwa 16 bis 32 Bit je Bild.

d) Der in Punkt c) erzeugte Merkmalsvektor (22) wird Referenzmuster genannt und später im Betrieb mit in gleicher Weise kontinuierlich aus dem laufenden Fernsehprogramm erzeugten Testmustern korrelativ in Form einer EXNOR-Verknüpfung verglichen. Bei einer Ähnlichkeit größer einer vorgegebenen Schwelle (z. B. 85 %) wird eine Erkennung angenommen. Die Erkennungen werden als Ähnlichkeitsmaß zusammen mit einem bildgenauen Zeitstempel in eine Datenbank eingetragen, die entsprechende Felder für alle zu vergleichenden Referenzmuster enthält.

e) Die Datenbank wird ständig von einer geeigneten Software auf zusammengehörige Zeitscheiben (15), die im richtigen bildmäßigen Abstand und mit ausreichender Ähnlichkeit erkannt wurden, geprüft. Wurde eine Mehrheit der Zeitscheiben (25) einer Bildfolge (14) erkannt, gilt die ganze Bildfolge als erkannt.

f) Der Erkennungsvorgang nach Punkt d) und e) erfolgt in Echtzeit, so daß eine Bildfolgeerkennung unmittelbar nachdem die Bildfolge bzw. der Werbespot gesendet wurde, angezeigt werden kann. Sodann werden alle Bildmerkmale (17), das sind beispielsweise bei einer Zeitscheibenlänge von 2 Sekunden = 86.400 Bit = 10,8 kByte, die in dem FIFO-Schieberegister (12) zwischengespeichert worden sind, der Feinerkennung zugeführt. Hier erfolgt eine Korrelation aller in Gebiete aufgeteilten Bilder (16) aller Zeitscheiben (15) einer Bildfolge (14). Dieser Vergleich kann mit vorausgewählten Referenzmustern vorgenommen werden, da die Bildfolgeerkennung im Grunde schon vorliegt.

## Patentansprüche

1. Verfahren zur Erkennung unikater Bildfolgen, bei dem den einzelnen Bildern der Bildfolgen Merkmale bezüglich ihrer Helligkeit entnommen, digitalisiert und mit einem Referenzmuster verglichen werden, wobei die Merkmale (17, 18) durch eine quasi stochastische Merkmalsentnahme entsprechend einer Zeitscheibe über mehrere Bilder (16) dadurch dekorreliert werden, daß ausgewählte Merkmale (17, 18) einzelner Bilder in geordneter Reihenfolge in einen als Schieberegister organisierten Speicher (19) eines Bilderkarussells (7) eingeschrieben und nach einem quasi stochastischen Verfahren im wahlfreien Zugriff ausgelesen werden,
**dadurch gekennzeichnet, daß** der Zugriff auf die Merkmale (17, 18) einerseits mit einer größtmöglichen Sprungweite (23) über die Bilder (16) hinweg und andererseits mit größtmöglicher räumlicher Distanz innerhalb der Bilder (16) erfolgt
und daß die Bilder (16) in eine Mehrzahl von aus räumlich zusammenhängenden Pixeln gebildeten Clustern aufgeteilt werden
und zur Bildung der Merkmale (17, 18) die Änderung der Helligkeit innerhalb der Clustern dadurch herangezogen wird, daß die Cluster einer diskreten Cosinus-Transformation unterworfen werden,

wobei als Merkmal (17, 18) ein auf sein Vorzeichen reduzierter niederfrequenter wechselkoeffizient der diskreten Cosinus Transformation verwendet wird.

2. Verfahren nach Anspruch 1, **dadurch gekennzeichnet, daß** jeweils nach etwa 40 ms die Merkmale (17, 18) eines neuen Bildes (20) dem Speicher (19) hinzugefügt und die Merkmale (17, 18) des ältesten Bildes (21) am Ende des Speichers (19) hinausgeschoben werden.

3. Verfahren nach einem der Ansprüche 1 oder 2, **dadurch gekennzeichnet, daß** die Merkmale (17, 18) einem Korrelator (9) zum Vergleich mit dem Referenzmuster zur Verfügung gestellt werden.

4. Verfahren nach einem der Ansprüche 1 bis 3, **dadurch gekennzeichnet, daß** die Bildfolge (14) in Zeitscheiben (15) konstanter Länge aufgeteilt wird.

5. Verfahren nach Anspruch 4, **dadurch gekennzeichnet, daß** jede Zeitscheibe (15) eine eigenständige Einheit darstellt, die korreliert wird.

6. Verfahren nach Anspruch 4 oder 5, **dadurch gekennzeichnet, daß** eine Bildfolge (14) erkannt wird, wenn die einzelnen Zeitscheiben (15) in der richtigen Reihenfolge und im richtigen zeitlichen Abstand erkannt werden.

7. Verfahren nach einem der Ansprüche 4 bis 6, **dadurch gekennzeichnet, daß** die Bildfolge (14) in Zeitscheiben (15) einer Länge von etwa 1,5 bis 2 Sekunden aufgeteilt wird.

8. Verfahren nach einem der Ansprüche 4 bis 7, **dadurch gekennzeichnet, daß** die Länge der Zeitscheiben (15) so gewählt wird, daß die Länge der Bildfolge (14) ohne Rest auf die Zeitscheiben (15) aufgeteilt werden kann.

9. Verfahren nach Anspruch 1, **dadurch gekennzeichnet, daß** die Cluster eine Größe von 8 x 8 pixeln aufweisen

10. Verfahren nach Anspruch 9, **dadurch gekennzeichnet, daß** die Cluster durch horizontale und vertikale Dezimation einem Downsampling unterzogen werden.

11. Verfahren nach Anspruch 10, **dadurch gekennzeichnet, daß** vier quadratisch angeordnete Pixel zu einem neuen Pixel zusammengefaßt werden.

12. Verfahren nach Anspruch 11, **dadurch gekennzeichnet, daß** ein 16 x 16 Pixel umfassender Cluster auf einen 8 x 8 Pixel großen Cluster zurückgeführt wird.

13. Verfahren nach einem der Ansprüche 1 bis 11, **dadurch gekennzeichnet, daß** eine zweistufige Verarbeitung mit einer ersten Stufe zur Groberkennung und einer zweiten Stufe zur Feinerkennung durchgeführt wird.

14. Verfahren nach Anspruch 13, **dadurch gekennzeichnet, daß** die Groberkennung in ihrem Datenaufkommen so reduziert wird, daß sie echtzeitfähig ist.

15. Verfahren nach Anspruch 13 oder 14, **dadurch gekennzeichnet, daß** zur Groberkennung aus den einzelnen Bildern (16) der Zeitscheiben (15) Merkmale (17, 18) entnommen und für die echtzeitfähige Korrelation in den Speicher (19) des Bilderkarussels (7) geladen und nach dem dekorrelierend wirkenden Zugriffsverfahren entnommen und als Merkmalsvektoren (22) je Zeitscheibe (15) weiterverarbeitet werden.

16. Verfahren nach Anspruch 15, **dadurch gekennzeichnet, daß** der Merkmalsvektor (22) einer Zeitscheibe (15) mit einem entsprechenden Referenzmuster in Form einer EXNOR-Verknüpfung verglichen und bei einer Erkennung in eine Datenbank eingetragen wird, die die entsprechenden Felder für alle zu vergleichenden Referenzmuster enthält.

17. Verfahren nach Anspruch 16, **dadurch gekennzeichnet, daß** die Datenbank ständig von einer geeigneten Software auf zusammengehörige Zeitscheiben (15), die im richtigen bildmäßigen Abstand und mit ausreichender Ähnlichkeit erkannt wurden, geprüft wird.

18. Verfahren nach Anspruch 17, **dadurch gekennzeichnet**, eine Bildfolge (14) als erkannt gilt, wenn eine Mehrheit Zeitscheiben (15) einer Bildfolge (14) erkannt wurden.

19. Verfahren nach einem der Ansprüche 13 bis 18, **dadurch gekennzeichnet, daß** die Feinerkennung erst dann erfolgt, wenn die Groberkennung eine Bildfolge (14) dem vorhandenen Referenzmuster zugeordnet hat.

20. Verfahren nach Anspruch 19, **dadurch gekennzeichnet, daß** bei der Feinerkennung alle Merkmale (17, 18), die zu Bildbereichen zusammengefaßt sind, verarbeitet werden.

21. Vorrichtung zur Durchführung des Verfahrens nach einem der Ansprüche 1 bis 20, **dadurch gekennzeichnet, daß** ein Bilderkarussell (7), das einen als Schieberegister organisierten Speicher (19) aufweist, einerseits über einen DCT-Transformer (5) mit einem Videodecoder (2) mit Raster/Cluster-Konverter verbunden ist und andererseits über einen Korrelator (9) mit einem Referenzspeicher (10) so verbunden ist, daß eine von einem Empfänger (4) in dem Videodecoder (2) eingespeiste Bildfolge (14) als ein Merkmals vektor (22) dem Korrelator (9) zuführbar und mit einem im Referenzspeicher (10) speicherbaren Referenzmuster vergleichbar ist, wobei der Merkmalsvektor (22) dadurch gebildet ist, daß ausgewählte Merkmale (17, 18) einzelner Bilder in dem Bilderkarusell eingeschrieben und nach einem quasi stochastischen Verfahren im wahlfreien Zugriff ausgelesen werden, wobei der Zugriff auf die Merkmale (17, 18) einerseits mit einer größt möglichen Sprungweite (23) über die Bilder (16) hinweg und andererseits mit größt möglicher räumlicher Distanz innerhalb der Bilder erfolgt, wobei die Bilder (16) in eine Mehrzahl von aus räumlich zusammenhängenden Pixeln gebildeten Clustern aufgeteilt sind und zur Bildung der Merkmale die Änderung der Helligkeit innerhalb der Cluster dadurch herangezogen wird, daß die Cluster einer diskreten Cosinus-Transformation unterworfen werden, wobei als Merkmal (17, 18) ein auf sein Vorzeichen reduzierter niederfrequenter Wechselkoeffizient der diskreten Cosinus-Transformation verwendet wird.

**22.** Vorrichtung nach Anspruch 21, **dadurch gekennzeichnet, daß** zwischen DCT-Transformer (5) und Bilderkarussell (7) eine Abzweigung zu einem Feinerkennungsspeicher vorgesehen ist.

**23.** Vorrichtung nach Anspruch 22, **dadurch gekennzeichnet, daß** der Feinerkennungsspeicher als FIfO-Schieberegister ausgebildet ist, in dem die gesamten Merkmale (17) einer Bildfolge (14) speicherbar sind.

**Claims**

**1.** Method of recognizing unique image sequences in which characteristics are extracted from the individual images of the image sequences with regard to their brightness, digitized and compared to a reference sample, wherein the characteristics (17, 18) are decorrelated by a quasi-stochastic characteristics extraction corresponding to a time slice over several images (16), in that selected characteristics (17, 18) of individual images are written in an ordered sequence into a memory (19), organized as a shift register, of an image carousel (7) and read out according to a quasi-stochastic method in random access, **characterized in that** the access to the characteristics (17, 18) on the one hand takes place with an optimally large jump width (23) over the images (16) and on the other hand takes place with an optimally large distance inside the images (16), and **in that** the images (16) are divided up into a number of clusters formed from spatially cohesive pixels, and **in that** for forming the characteristics (17, 18) the change in brightness inside the clusters is utilized that the clusters are subjected to a discrete cosin transform, wherein as characteristic (17, 18) a low-frequency alternating coefficient of the discrete cosin transform reduced to its sign is utilized.

**2.** Method according to claim 1, **characterized in that**, after roughly each 40 milliseconds, the characteristics (17, 18) of a new image (20) are fed to the memory (19) and the characteristics (17, 18) of the oldest image (21) are shifted out at the end of the memory (19).

**3.** Method according to one of claims 1 or 2, **characterized in that** the characteristics (17, 18) are made available to a correlator (9) for comparison to the reference sample.

**4.** Method according to one of claims 1 to 3, **characterized in that** the image sequence (14) is divided into time slices (15) of constant length.

**5.** Method according to claim 4, **characterized in that** each time slice (15) represents an independent unit that is correlated.

**6.** Method according to claim 4 or 5, **characterized in that** an image sequence (14) is recognized if the individual time slices (15) are recognized in the correct sequence and in the correct time intervals.

**7.** Method according to one of claims 4 to 6, **characterized in that** the image sequence (14) is divided up into time slices (15) of a length of roughly 1,5 to 2 seconds.

**8.** Method according to one of claims 4 to 7, **characterized in that** the length of the time slices (15) is selected such that the length of the image sequence (14) can be divided up into time slices (15) without a remainder.

**9.** Method according to claim 1, **characterized in that** the clusters have a size of 8 x 8 pixels.

**10.** Method according to claim 9, **characterized in that** the clusters are subjected to a downsampling by horizontal and vertical decimation.

**11.** Method according to claim 10, **characterized in that** four quadratically arranged pixels are summed into one new pixel.

**12.** Method according to claim 11, **characterized in that** a cluster comprising 16 x 16 pixels is reduced to a cluster of 8 x 8 pixels in size.

**13.** Method according to one of the claims 1 to 11, **characterized in that** a two-stage processing is conducted, with a first stage for general recognition and a second stage for detailed recognition.

**14.** Method according to claim 13, **characterized in that** the general recognition is reduced in its data accumulation such that it is suitable for real-time use.

**15.** Method according to claim 13 or 14, **characterized in that** characteristics (17, 18) are extracted from the individual images (16) of the time slices (15) for general recognition and loaded into the memory (19) of the image carousel (7) for real-time-capable correlation and extracted according to an access method with a decorrelating effect and further processed as characteristics vectors (22) for each time slice (15).

**16.** Method according to claim 15, **characterized in that** the characteristics vector (22) of a time slice (15) is compared to a corresponding reference sample in the form of an XNOR operation, and, in case of recognition, is entered into a database which contains appropriate fields for all reference samples to be compared.

**17.** Method according to claim 16, **characterized in that** the database is continually checked by suitable software for related time slices (15) that were recognized in the correct graphical spacing and with sufficient similarity.

**18.** Method according to claim 17, **characterized in that** an image sequence (14) is considered as recognized if a majority of the time slices (15) of an image sequence (14) were recognized.

**19.** Method according to one of claims 13 to 18, **characterized in that** the detailed recognition takes place only if general recognition has assigned an image sequence (14) to the existing reference sample.

**20.** Method according to Claim 19, **characterized in that** during the detailed recognition all the characteristics (17, 18) that are summarized into image areas are processed.

**21.** Device for performing the method according to one of Claims 1 to 20, **characterized in that** that an image carousel (7) having a memory (19) organized as a shift register (7) is connected at one end via a DCT transformer (5) to a video decoder (2) with a raster/cluster converter and, at the other end, via a correlator (9) to a reference memory (10) such that an image sequence (14) fed in from a receiver (4) in the video decoder (2) can be supplied to the correlator (9) as a characteristic vector (22) and can be combined with a reference sample that can be stored in the reference memory (10), wherein the characteristic vector (22) is formed in such way that selected characteristics (17, 18) of individual images are written in the image carousel and read out according to a quasi-stochastic method in random access, wherein the access to the characteristics (17, 18) on the one hand takes place with an optimally large jump width (23) over the images (16) and on the other hand takes place with an optimally large distance inside the images, wherein the images (16) are divided up into a number of clusters formed from spatially cohesive pixels and for forming the characteristics the change of brightness inside the clusters is utilized in such way that the clusters are subjected to a discrete cosine transform, wherein one of the low frequency alternating coefficients of the discrete cosine transform reduced to its sign, is utilized.

**22.** Device according to claim 21, **characterized in that** a branch to a detailed recognition memory is provided between DCT transformer (5) and image carousel (7).

**23.** Device according to claim 22, **characterized in that** the detailed recognition memory is constructed as a FIFO shift register in which the entire characteristics (17) of an image sequence (14) can be stored.

**Revendications**

**1.** Procédé pour la reconnaissance de séquences uniques d'images, dans lequel des caractéristiques de luminosité sont extraites des images individuelles des séquences d'images, sont numérisées et sont comparées à un modèle de référence, les caractéristiques (17, 18) étant en l'occurrence décorrélées sur plusieurs images (16), par une extraction de caractéristiques quasi stochastique conformément à une tranche de temps, en introduisant des caractéristiques sélectionnées (17, 18) d'images individuelles, dans un ordre ordonné, dans une mémoire (19) d'un carroussel d'images (7) organisée en registre à décalage et en les extrayant selon un accès aléatoire selon une méthode quasi stochastique, **caractérisé en ce que** l'accès aux caractéristiques (17, 18) s'effectue d'une part avec une largeur de saut (23) la plus grande possible par-dessus les images (16) et d'autre part avec une distance spatiale la plus grande possible à l'intérieur des images (16),

et **en ce que** les images (16) sont partagées en plusieurs blocs formés de pixels contigus

et le changement de luminosité à l'intérieur des blocs est utilisé pour la formation des caractéristiques (17, 18), en soumettant les blocs à une transformée en cosinus discrète,

dans lequel un coefficient de variation à basse fréquence de la transformée en cosinus discrète, réduit à son signe, est en l'occurrence utilisé comme caractéristique (17, 18).

2. Procédé selon la revendication 1, **caractérisé en ce que**, respectivement après environ 40 ms, les caractéristiques (17, 18) d'une nouvelle image (20) sont ajoutées à la mémoire (19) et les caractéristiques (17, 18) de l'image la plus ancienne (21) sont décalées vers la fin de la mémoire (19).

3. Procédé selon l'une des revendications 1 ou 2, **caractérisé en ce que** les caractéristiques (17, 18) sont mises à la disposition d'un corrélateur (9) pour la comparaison avec le modèle de référence.

4. Procédé selon l'une des revendications 1 à 3, **caractérisé en ce que** la séquence d'images (14) est partagée en tranches de temps (15) de longueur constante.

5. Procédé selon la revendication 4, **caractérisé en ce que** chaque tranche de temps (15) représente une unité. indépendante, qui est corrélée.

6. Procédé selon la revendication 4 ou 5, **caractérisé en ce qu'**une séquence d'images (14) est reconnue quand les tranches de temps individuelles (15) sont reconnues dans le bon ordre et dans le bon intervalle de temps.

7. Procédé selon l'une des revendications 4 à 6, **caractérisé en ce que** la séquence d'images (14) est partagée en tranches de temps (15) d'une longueur d'environ 1,5 à 2 secondes.

8. Procédé selon l'une des revendications 4 à 7, **caractérisé en ce que** la longueur des tranches de temps (15) est choisie de telle sorte que la longueur de la séquence d'images (14) puisse être répartie sans reste sur les tranches de temps (15).

9. Procédé selon la revendication 1, **caractérisé en ce que** les blocs ont une taille de 8 x 8 pixels.

10. Procédé selon la revendication 9, **caractérisé en ce que** les blocs sont soumis à un échantillonnage par décimation horizontale et verticale.

11. Procédé selon la revendication 10, **caractérisé en ce que** quatre pixels disposés en carré sont regroupés en un nouveau pixel.

12. Procédé selon la revendication 11, **caractérisé en ce qu'**un bloc comprenant 16 x 16 pixels est ramené à un bloc de 8 x 8 pixels.

13. Procédé selon l'une des revendications 1 à 11, **caractérisé en ce qu'**un traitement en deux étapes est exécuté, avec une première étape pour la reconnaissance grossière et une deuxième étape pour la reconnaissance fine.

14. Procédé selon la revendication 13, **caractérisé en ce que** la reconnaissance grossière est si réduite en volume de données qu'elle s'effectue en temps réel.

15. Procédé selon la revendication 13 ou 14, **caractérisé en ce que**, pour la reconnaissance grossière, des caractéristiques (17, 18) sont extraites des images individuelles (16) des tranches de temps (15) et, pour la corrélation en temps réel, elles sont chargées dans la mémoire (19) du carroussel d'image (7) et sont extraites d'après la méthode d'accès à effet décorrélateur pour être traitées ultérieurement comme vecteurs caractéristiques (22) des différentes tranches de temps (15).

16. Procédé selon la revendication 15, **caractérisé en ce que** le vecteur caractéristique (22) d'une tranche de temps (15) est comparé à un modèle de référence correspondant se présentant sous forme d'une fonction logique NI exclusif, et en cas de reconnaissance il est enregistré dans une banque de données qui contient les champs correspondants pour tous les modèles de référence à comparer.

17. Procédé selon la revendication 16, **caractérisé en ce que** la banque de données est contrôlée en permanence par un logiciel approprié qui vérifie si elle contient des tranches de temps (15) connexes, qui ont été reconnues dans le bon intervalle d'images et avec une similitude suffisante.

18. Procédé selon la revendication 17, **caractérisé en ce qu'**une séquence d'images (14) est considérée comme reconnue quand une majorité de tranches de temps (15) d'une séquence d'images (14) a été reconnue.

19. Procédé selon l'une des revendications 13 à 18, **caractérisé en ce que** la reconnaissance fine s'effectue seulement quand la reconnaissance grossière a attribué une séquence d'images (14) au modèle de référence existant.

**20.** Procédé selon la revendication 19, **caractérisé en ce que**, dans la reconnaissance fine, toutes les caractéristiques (17, 18) qui sont regroupées en régions d'image sont traitées.

**21.** Dispositif pour l'exécution du procédé selon l'une des revendications 1 à 20, **caractérisé en ce qu'**un carroussel d'images (7), qui possède une mémoire (19) organisée en registre à décalage, est d'une part relié à un décodeur vidéo (2) avec convertisseur trame-bloc par l'intermédiaire d'un transformeur DCT (5), et d'autre part à une mémoire de référence (10) par l'intermédiaire d'un corrélateur (9), **en ce qu'**une séquence d'images (14) envoyée dans le décodeur vidéo (2) à partir d'un récepteur (4) peut être acheminée comme vecteur caractéristique (22) vers le corrélateur (9) et peut être comparée à un modèle de référence enregistrable dans la mémoire de référence (10), dans lequel le vecteur caractéristique (22) est en l'occurrence formé en introduisant dans le carroussel d'images des caractéristiques sélectionnées (17, 18) d'images individuelles et en les extrayant selon un accès aléatoire d'après une méthode quasi stochastique, dans lequel l'accès aux caractéristiques (17, 18) s'effectue d'une part avec une largeur de saut (23) la plus grande possible par-dessus les images (16) et d'autre part avec une distance spatiale la plus grande possible à l'intérieur des images, dans lequel les images (16) sont en l'occurrence partagées en plusieurs blocs formés de pixels contigus et le changement de luminosité à l'intérieur des blocs étant en l'occurrence utilisé pour la formation des caractéristiques, **en ce qu'**on soumet les blocs à une transformée en cosinus discrète, dans laquelle un coefficient de variation à basse fréquence de la transformée en cosinus discrète, réduit à son signe, est en l'occurrence utilisé comme caractéristique (17, 18).

**22.** Dispositif selon la revendication 21, **caractérisé en ce qu'**une dérivation vers une mémoire de reconnaissance fine est prévue entre le transformeur DCT (5) et le carroussel d'images (7).

**23.** Dispositif selon la revendication 22, **caractérisé en ce que** la mémoire de reconnaissance fine est conçue comme registre à décalage FIFO, dans lequel l'ensemble des caractéristiques (17) d'une séquence d'images (14) peut être enregistré.

Figur 1

EP 0 889 431 B1

← Werbespots  *14*

Δt < 2sec, verloren    ↑ *14*

*15* *15* *15* *15* *15* *15*    *15* *15*

*Figur 2*

Bilder ——→

*15*

| *17* | *17* | | | | | *15* | | | *17* |
| 1 | 2 | 3 | 4 | | 48 | 49 | 50 | |

*17* *16* *16* *16* *16*    *16* *16* *16*

*Figur 3*

*22*

*Figur 4*

Figur 5

Figur 6

| $C_{nk}$ | 0 | 1 | 2 | 3 |
|---|---|---|---|---|
| 0 | 120000 | 6200 | 1600 | |
| 1 | 6000 | 1400 | 600 | |
| 2 | 1500 | 600 | 340 | |
| 3 | | | | |

Figur 8

Figur 7

|  | Datenmenge je Bild | Reduktionsfaktor |
|---|---|---|
| Luminanz-Signal nach CCIR 768 x 576 Pixel | 442 368 Byte | 1 |
| Nach Blockbildung | 13 824 Byte | 32 |
| Blockbildung mit Dezimation | 3 456 Byte | 128 |
| Auswahl für Groberkennung | 32 Byte | 13 824 |
| Signum-Funktion | 4 Byte | $110\,592 \approx 1,1 \cdot 10^5$ |

*Figur 9*

ohne Downsampling

Figur 10

EP 0 889 431 B1

**2h2v downsampling**

DCT-Werte    Varianz:    C01 : 4928,60

*Figur 11*

Figur 12

Figur 13

Figur 14

EP 0 889 431 B1

Figur 15

EP 0 889 431 B1